# FASCICULE DE BREVET EUROPEEN

(11) **EP 0 633 551 B1**
(45) Date de publication et mention de la délivrance du brevet: **29.04.1998**
(21) Numéro de dépôt: 94401555.1
(22) Date de dépôt: 06.07.1994
(51) Int. Cl.: G07B 15/00

(54) **Procédé pour la transmission rapide et sûre de données contenues dans une carte à puce lors d'une télétransaction**
Verfahren zur schnellen und sicheren Übertragung von in einer IC-Karte enthaltenen Daten, während einer Teletransaktion
Method for fast and secure transmission of data contained in an IC-card during a teletransaction

(30) Priorité: 09.07.1993 FR 9308482
(43) Date de publication de la demande: 11.01.1995
(73) Titulaire: ALCATEL ALSTHOM COMPAGNIE GENERALE D'ELECTRICITE, 75008 Paris (FR)
(72) Inventeur: Bueno, Serge, F-91080 Courcouronnes (FR)
(74) Mandataire: Gosse, Michel

(56) Documents cités:
- EP-A- 0 323 326
- EP-A- 0 425 961
- WO-A-91/18354
- GB-A- 2 247 096

## Description

La présente invention concerne un procédé pour la transmission rapide et sûre de données contenues dans une carte à puce lors d'une télétransaction entre un équipement mobile comportant un lecteur de carte à puce et un poste fixe.

L'invention s'applique en particulier au télépéage, permettant d'exécuter une transaction entre des véhicules circulant à grande vitesse et des stations de contrôle ; elle s'applique également au contrôle d'accès de personnes munies d'équipements communiquant à faible distance avec des postes de contrôle d'accès.

De telles communications sont généralement effectuées par ondes électromagnétiques ou optiques qui offrent une durée de communication courte résultant, d'une part du rapport entre la dimension de la zone de communication possible (zone couverte par les ondes) et la vitesse du mobile, et d'autre part de la durée autorisée de communication. Cependant, les cartes à puce existantes ont été étudiées pour des applications dans lesquelles il n'y a pas de grandes contraintes de rapidité de lecture de la carte, par exemple dans les applications bancaires ou téléphoniques.

Ainsi, la contrainte de durée courte de communication et de transaction, dans le cas des télétransactions, est généralement incompatible avec les performances des cartes à puce connues actuellement.

Pour résoudre ce problème, une solution connue consiste à mémoriser, lors de l'introduction de la carte dans le lecteur embarqué, les informations de la carte dans une mémoire rapide du lecteur embarqué, de telle sorte que, lors de la transaction, ce sont les données mémorisées dans la mémoire rapide du lecteur embarqué qui sont transférées par ondes électromagnétiques ou optiques au poste fixe, permettant ainsi un transfert rapide des données et rendant possible la transaction.

L'opération de chargement automatique de la mémoire rapide du lecteur embarqué est effectuée par un contact de détection de présence qui déclenche une procédure automatique de mise à jour de la mémoire rapide du lecteur embarqué.

Cette solution, si elle permet en effet le transfert rapide des données lors de la transaction, présente néanmoins un gros inconvénient, car rien ne permet d'avoir la certitude que les données mémorisées dans la mémoire rapide du lecteur sont vraiment celles contenues dans la carte réellement enfichée dans le lecteur au moment de la transaction. En effet, des manipulations frauduleuses peuvent être effectuées qui rendent incertaine une telle coïncidence.

Ainsi, un fraudeur peut, après avoir introduit une première carte qui déclenche une mise à jour de la mémoire du lecteur embarqué, verrouiller mécaniquement le contact de détection carte et introduire une nouvelle carte. L'équipement fixe, au moment de la transaction recevra ainsi des données relatives à une carte non enfichée. D'autres types de fraudes peuvent également se produire.

L'invention a ainsi pour but de pallier cet inconvénient et a pour objet un procédé pour la transmission rapide et sûre de données contenues dans une carte à puce lors d'une télétransaction entre un équipement mobile comportant un lecteur de carte à puce et un poste fixe, ledit lecteur de carte comportant une mémoire rapide, caractérisé en ce que, lors de l'introduction de la carte dans ledit lecteur, le lecteur mémorise dans ladite mémoire rapide, outre les données de la carte, un couple de données dont l'une identifie le numéro de la carte, et dont l'autre correspond à un numéro d'ordre d'accès à la carte, chaque accès, par un lecteur quelconque, incrémentant dans la carte ce numéro d'ordre d'une unité et en ce que, lors de la transaction, l'équipement mobile, interrogé à distance par le poste fixe, compare ledit couple de données mémorisées dans ladite mémoire rapide dudit lecteur avec le couple de données de la carte actuellement enfichée dans l'équipement mobile et transmet au poste fixe le résultat de la comparaison et les données de la carte mémorisées dans la mémoire rapide.

Ainsi, grâce au procédé de l'invention, le couple de données utilisé (numéro de carte et numéro d'ordre d'accès à la carte), identifie de manière non ambiguë le contenu d'une carte. En outre, ce couple de données est un couple de données invariant en durée, indépendant du nombre et de la taille des autres données contenues dans la carte, mais les identifiant. Au moment de la transaction, ce couple de valeur, que l'on appelle Identifiant Universel de Contenu de Carte : "IUCA" est lu par l'équipement mobile pour le comparer avec celui mémorisé lors de l'introduction de la carte, mais cette lecture de l'"IUCA" de la carte enfichée est rapide car cet "IUCA" est une information très courte, généralement 64 bits.

L'identification de la carte et de son contenu par cet "IUCA" est fondée sur le fait qu'une carte est identifiée d'une manière univoque par son numéro de série constructeur et qu'il n'est pas possible d'accéder à son contenu sans qu'elle soit alimentée et qu'elle subisse une procédure d'initialisation.

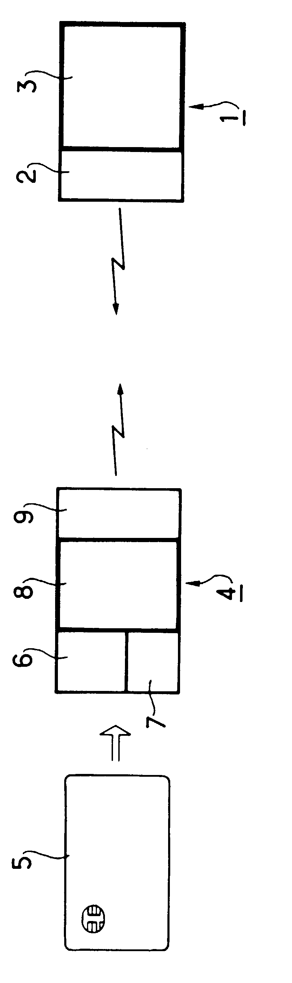

La figure unique jointe est un schéma qui illustre le procédé de l'invention.

Sur ce schéma, on a figuré un poste fixe 1 correspondant par exemple à une station de péage d'autoroute. Ce poste fixe comprend un module d'émission-réception 2 et un module 3 de traitement, de gestion et de commande. Le véhicule, non représenté, comporte un équipement mobile 4 constitué d'un boîtier capable de recevoir une carte à puce 5. L'équipement mobile 4 comprend un lecteur 6 comportant une mémoire rapide 7, une unité de traitement 8 et un module d'émission-réception 9.

Lors de l'introduction d'une carte telle que 5 dans le boîtier de l'équipement mobile 4, la carte est alimentée, et subit une procédure d'initialisation provoquant dans la carte une incrémentation d'une unité, d'un "compteur" dont le contenu est un numéro d'ordre correspondant donc au nombre d'accès successifs à la carte. Ce numéro ainsi que le numéro de la carte constituent un couple de données appelé Identifiant Universel de Contenu de Carte : "IUCA". Cet IUCA est lu et mémorisé dans la mémoire rapide 7 ainsi que les autres données de la carte 5.

Lorsque l'équipement mobile 4 arrive dans la zone couverte par l'émetteur-récepteur 2 du poste fixe 1, l'équipement mobile 4, interrogé par le poste fixe 1, commence par "réveiller" la carte 5 enfichée dans le boîtier de l'équipement mobile pour lire l'IUCA de la carte et le comparer avec l'IUCA mémorisé dans la mémoire rapide 7. A noter que cette lecture de l'IUCA de la carte enfichée provoque l'incrémentation d'une unité du compteur. Ainsi, en l'absence de fraude, il y a normalement un décalage d'une unité dans la comparaison effectuée entre l'IUCA lu dans la carte et l'IUCA mémorisé dans la mémoire rapide 7.

Le résultat de la comparaison, ainsi que les données de la carte, mémorisées dans la mémoire rapide 7 sont transmises par le module 9 au poste fixe 1.

Le procédé de l'invention permet ainsi de détecter toute fraude consistant à retirer une carte du boîtier 4 en bloquant le contact de présence carte, et à introduire une autre carte. En effet, au moment de la transaction, on détecte alors une non-égalité des numéros de carte.

Le procédé permet également de détecter une fraude consistant à retirer la carte en bloquant le contact de présence carte et en modifiant le contenu de la carte en l'introduisant dans un autre lecteur de carte. La fraude est alors détectée au moment de la transaction par la comparaison du numéro d'ordre d'accès (compteur).

On détecte également tout défaut de contact de présence carte qui ne déclencherait pas de remise à jour de l'IUCA sur introduction de carte.

## Revendications

1. Procédé pour la transmission rapide et sûre de données contenues dans une carte à puce (5) lors d'une télétransaction entre un équipement mobile (4) comportant un lecteur (6) de carte à puce et un poste fixe (1), ledit lecteur (6) de carte comportant une mémoire rapide (7), caractérisé en ce que lors de l'introduction de la carte dans ledit lecteur, le lecteur mémorise dans ladite mémoire rapide (7), outre les données de la carte, un couple de données dont l'une identifie le numéro de la carte et dont l'autre correspond à un numéro d'ordre d'accès à la carte, chaque accès, par un lecteur quelconque, incrémentant dans la carte ce numéro d'ordre d'une unité et en ce que, lors de la transaction, l'équipement mobile (4), interrogé à distance par le poste fixe (1), compare ledit couple de données mémorisé dans ladite mémoire rapide (7) dudit lecteur (6) avec le couple de données de la carte actuellement enfichée dans l'équipement mobile (4) et transmet au poste fixe (1) le résultat de la comparaison et les données de la carte mémorisées dans la mémoire rapide (7).

## Patentansprüche

1. Verfahren zur schnellen und sicheren Übertragung von in einer Chipkarte (5) enthaltenen Daten bei einer Teletransaktion zwischen einem mobilen Gerät (4), das einen Chipkartenleser (6) umfaßt, und einer festen Station (1), wobei der Kartenleser (6) einen schnellen Speicher (7) aufweist, dadurch gekennzeichnet, daß bei der Einführung der Karte in den besagten Leser der Leser in dem schnellen Speicher (7) zusätzlich zu den Daten der Karte ein Paar von Daten speichert, von denen das eine die Nummer der Karte identifiziert, und von denen das andere einer Kartenzugriffs-Ordnungszahl entspricht, wobei jeder Zugriff durch einen beliebigen Leser die Ordnungszahl um eine Einheit erhöht, und daß bei der Transaktion das mobile Gerät (4), das aus einer Distanz durch die feste Station (1) abgefragt wird, das in dem schnellen Speicher (7) des Lesers (6) gespeicherte Paar von Daten mit dem Paar von Daten der Karte, die momentan in dem mobilen Gerät (4) steckt, vergleicht und das Ergebnis des Vergleichs und die Daten der Karte, die in dem schnellen Speicher (7) gespeichert sind, an die feste Station (1) übermittelt.

## Claims

1. A method of transmitting data quickly and securely from a smart card (5) during a remote transaction between a fixed station (1) and a mobile item of equipment (4) containing a smart-card reader (6), said card reader (6) having a fast memory (7), said method being characterized in that, on receiving said card, and in addition to storing the data from the card in said fast memory (7), said reader also stores a pair of data items in said fast memory, one of which data items identifies the number of the card, and the other data item corresponds to an access count indicating the number of accesses to the card, each access by any reader incrementing the access count in the card by unity, and in that, during the transaction, the mobile item of equipment (4), which is interrogated remotely by the fixed station (1), compares said pair of data items stored in said fast memory (7) of said reader (6) with the pair of data items of the card that is currently inserted in the mobile item of equipment (4), and transmits the result of the comparison and the data of the card, which data is stored in the fast memory (7), to the fixed station (1).
